# EUROPÄISCHE PATENTSCHRIFT

(11) **EP 2 742 284 B1**
(45) Veröffentlichungstag und Bekanntmachung des Hinweises auf die Patenterteilung: **01.07.2015**
(21) Anmeldenummer: 12746324.8
(22) Anmeldetag: 08.08.2012
(51) Int. Cl.: F21V 31/00, H01B 17/58

(54) **ELEKTRISCHE VORRICHTUNG MIT DICHTELEMENT, DICHTELEMENT FÜR EINE ELEKTRISCHE VORRICHTUNG UND VERFAHREN ZUM ABDICHTEN EINES GEHÄUSES**
ELECTRICAL DEVICE COMPRISING A SEALING ELEMENT, A SEALING ELEMENT FOR AN ELECTRICAL DEVICE, AND A METHOD FOR SEALING A HOUSING
DISPOSITIF ÉLECTRIQUE POURVU D'UN ÉLÉMENT D'ÉTANCHÉITÉ, ÉLÉMENT D'ÉTANCHÉITÉ POUR UN DISPOSITIF ÉLECTRIQUE ET PROCÉDÉ POUR RENDRE ÉTANCHE UN BOÎTIER

(30) Priorität: 11.08.2011 DE 102011052576
(43) Veröffentlichungstag der Anmeldung: 18.06.2014
(73) Patentinhaber: Hella KGaA Hueck & Co, 59552 Lippstadt (DE)
(72) Erfinder: KERPE, Alexander, 59555 Lippstadt (DE)
(74) Vertreter: Jöstingmeier, Martin
(86) Internationale Anmeldenummer: PCT/EP2012/065546
(87) Internationale Veröffentlichungsnummer: WO 2013/021017

(56) Entgegenhaltungen:
- EP-A1- 1 063 748
- DE-A1- 10 045 728
- DE-U1- 20 114 842
- US-A1- 2007 246 962

## Beschreibung

### Technisches Gebiet

Die vorliegende Erfindung betrifft eine elektrische Vorrichtung, insbesondere ein Dichtmodul, ein Dichtelement ausgebildet für das Einsetzen in einer Dichtaufnahme einer elektrischen Vorrichtung sowie ein Verfahren zum Abdichten eines Gehäuses einer elektrischen Vorrichtung.

### Stand der Technik

Es ist bekannt, dass elektrische Vorrichtungen mit Strom versorgt werden müssen. Diese Stromversorgung bzw. der Signaltausch erfolgt häufig über Kabel. Solche Kabel müssen in das Gehäuse einer elektrischen Vorrichtung eingeführt werden. Hierfür ist in Gehäusen von elektrischen Vorrichtungen häufig eine Öffnung vorgesehen, durch welche hindurch ein solches Kabel geführt ist. Bei bekannten elektrischen Vorrichtungen und entsprechenden Dichtelementen für die Durchführung solcher Kabel ist nachteilig, dass ein hoher Aufwand für die Montage notwendig wird. Häufig wird bei geschlossenen Öffnungen ein durchfädeln des Kabels notwendig, wobei die entsprechenden Steckkontakte im Inneren des Gehäuses erst nach dem Hindurchführen des Kabels durch die Öffnung angebracht werden können. Dies führt dazu, dass die Endkonfektionierung des Kabels mit den Steckkontakten erst in einem abschließenden Montageschritt erfolgen kann und dementsprechend aufwendig und komplex ist.

Alternativ ist bekannt, dass Kabeldurchführungen vollständig ausgegossen werden. Dies hat den Nachteil, dass durch das Ausgießen erst nach dem Aushärten des Gussmaterials eine notwendige Zugentlastung für die Kabeldurchführung vorliegt. Auch die abschließende Dichtheit wird erst nach vollständigem Aushärten erzielt. Die Abdichtung hängt dabei von dem Aushärtgrad sowie von der Verteilung der Dichtmasse ab, sodass eine nicht steuerbare Einflussgröße hinsichtlich dieser Verteilung während des Aushärtvorganges die Qualität nicht nachprüfbar beeinflusst. Ein weiterer Nachteil ist es, dass während des Aushärtens keine weiteren Montageschritte durchgeführt werden können, da in dieser Zeit ohne die entsprechende Zugentlastung der Kabeldurchführung ein weiteres Handling die Qualität der Abdichtung minimieren würde.

Die US 2007/0246962 A1 offenbart eine Kabeldurchführung für eine Fahrzeugbeleuchtung, wobei das Kabel nachträglich durch die Durchführung hindurchgeführt werden kann.

Das US-Patent 7,049,515 B1 offenbart eine Kabeldurchführung, welche nachträglich auf ein Kabel aufgeschnappt werden kann.

In der JP 2003 163 473 A ist eine Kabeldurchführung offenbart, welche in ein Gehäuse eingesetzt werden kann.

In der JP 2009 189 210 ist eine weitere Kabeldurchführung offenbart, die ebenfalls in ein Gehäuse eingesetzt werden kann.

In der EP 1 063 748 A1 ist ein abgedichtetes Gehäuse mit einer ebenfalls dichten Kabeldurchführung offenbart.

DE 100 45 728 A1 offenbart ein Gehäuse für ein elektronisches Steuergerät, das zur Anordnung in einem Motorraum eines Automobils vorgesehen ist und eine verbesserte wasserdichte Struktur besitzen soll. Das Gehäuse hat einen quadratischen Gehäusekörper, der mit einer Abdeckung verschlossen werden kann. Zwischen den beiden Gehäusehälften wird ein Steckverbinder eingespannt und dadurch mechanisch abgefangen. Der Gehäusekörper hat in seinem Randbereich eine als umlaufende Nut, die mit einem sogenannten Flüssigkeitsabdichtungsmaterial ausgefüllt ist. In dieses Flüssigkeitsabdichtungsmaterial taucht die Abdeckung mit einem umlaufenden Wulstabschnitt ein. Der Steckverbinder hat an seiner Oberseite eine Ausnehmung, die die Nut fortsetzt und die ebenso mit dem Flüssigkeitsabdichtungsmaterial gefüllt ist.

DE 20 114 842 U1 zeigt ein Gehäuse für ein Steckernetzteil mit zwei aufeinanderzusetzenden Hälften. Am nach unten weisenden Rand der oberen Hälfte ist ein Steg, der in eine komplementäre Nut der unteren Hälfte eingreift. Beide Gehäusehälften haben je eine Aussparung für eine Kabelzugentlastung in der ein Kabel 31 befestigt ist. Nach dem zusammensetzen werden die Hälften und die Kabelzugentlastung verschweißt und das Gehäuse dadurch wasserdicht verschlossen.

### Darstellung der Erfindung

Es ist Aufgabe der vorliegenden Erfindung, die voranstehend beschriebenen Nachteile zu beheben. Insbesondere ist es Aufgabe der vorliegenden Erfindung, eine elektrische Vorrichtung, ein Dichtelement sowie ein Verfahren zum Abdichten eines Gehäuses einer elektrischen Vorrichtung zur Verfügung zu stellen, welche in kostengünstiger und einfacher Weise eine konstruktiv einfache Montage sowie einen hohen Qualitätsanspruch hinsichtlich des Abdichtens des Gehäuses bei einer Kabeldurchführung ermöglichen.

Die voranstehende Aufgabe wird gelöst durch eine elektrische Vorrichtung mit den Merkmalen des unabhängigen Anspruches 1, durch ein Dichtelement mit den Merkmalen des unabhängigen Anspruches 8 sowie durch ein Verfahren mit den Merkmalen des unabhängigen Anspruches 9. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit den erfindungsgemäßen Dichtelementen und dem erfindungsgemäßen Verfahren, sodass bezüglich der Offenbarung zu den einzelnen Erfindungsaspekten stets wechselseitig Bezug genommen wird bzw. werden kann.

Eine erfindungsgemäße elektrische Vorrichtung, insbesondere ein Lichtmodul, weist ein Gehäuse mit zumindest einem ersten und einem zweiten Gehäuseteil auf. Dabei ist in dem ersten Gehäuseteil wenigstens eine Verbindungsnut vorgesehen, die für das abschnittsweise Aufnehmen wenigstens des zweiten Gehäuseteils ausgebildet ist. Unter abschnittsweisem Aufnehmen des zweiten Gehäuseteils ist zu verstehen, dass z. B. ein Fortsatz des zweiten Gehäuseteils in diese Verbindungsnut hineinragt. Die Verbindungsnut ist vorzugsweise umlaufend um das erste Gehäuseteil angeordnet, sodass eine entsprechende Kombination der beiden Gehäuseteile möglich wird. Eine erfindungsgemäße elektrische Vorrichtung zeichnet sich dadurch aus, dass das erste Gehäuseteil eine Dichtaufnahme aufweist, in die ein Dichtelement mit einer Dichtnut derart eingesetzt ist, dass die Dichtnut die Verbindungsnut zumindest abschnittsweise fortsetzt. Eine erfindungsgemäße elektrische Vorrichtung weist in dem ersten Gehäuseteil insbesondere einen Bruch in der Verbindungsnut auf, welcher durch die Dichtaufnahme ausgebildet wird. Dieser Bruch, also das Fehlen der Fortsetzung der Verbindungsnut, wird durch das Einsetzen des Dichtelementes in der Dichtaufnahme geschlossen. Das Schließen erfolgt dabei jedoch erfindungsgemäß in einer Weise, dass die Dichtnut die Verbindungsnut fortsetzt.

In dem Bereich der Dichtaufnahme erfolgt vorzugsweise ein im Wesentlichen kontinuierlicher Übergang zwischen Verbindungsnut und Dichtnut, sodass hier ein Abdichten innerhalb der Dichtnut durch das Einsetzen des zweiten Gehäuseteils in die Dichtnut bzw. in die Verbindungsnut möglich wird. Dabei reicht es erfindungsgemäß aus, wenn die Dichtnut als solche für das Einsetzen einer abschnittsweisen Aufnahme des zweiten Gehäuseteils ausgebildet ist. Bereits durch dieses Einsetzen erfolgt eine erste Abdichtung. Selbstverständlich ist es auch möglich, dass weitere Dichtmittel vorgesehen sind, die insbesondere in der Dichtnut und der Verbindungsnut angeordnet werden. Dabei kann es sich um Feststoffe handeln, wie es z. B. bei O-Ringen oder anderen elastischen Materialien der Fall ist. Auch flüssige Materialien, wie z. B. Kleber können in die Verbindungsnut und die Dichtnut eingefüllt werden, sodass nach deren Aushärten eine Abdichtung erzielt werden kann. Selbstverständlich kann beim Einfüllen von flüssigen Materialien, wie z. B. Kleber, zusätzlich zur Abdichtfunktion auch eine Verbindungsfunktion erfüllt werden.

Eine erfindungsgemäße elektrische Vorrichtung bringt den Vorteil mit sich, dass eine aufbauende Montage möglich wird. So kann eine elektrische Vorrichtung, z. B. ein Lichtmodul, mit den entsprechenden elektrischen Komponenten im ersten Gehäuseteil ausgebildet werden. Das erste Gehäuseteil liegt mit der Öffnung nach oben auf einer Montagevorrichtung, sodass nach dem Einsetzen der elektrischen Bauteile z. B. eine Kabelverbindung mit einem erfindungsgemäßen Dichtelement in der Dichtaufnahme eingesetzt wird. Dadurch wird die Dichtnut in fortsetzender Weise mit der Verbindungsnut arrangiert, sodass anschließend das zweite Gehäuseteil aufgesetzt und das Gehäuse damit geschlossen werden kann. Diese aufbauende Montageweise ermöglicht es, dass das Kabel bei der Durchführung mit einem erfindungsgemäßen Dichtelement bereits vollständig vorkonfektioniert sein kann. Die Endmontage wird auf diese Weise deutlich schneller und auch kostengünstiger durchgeführt werden können.

Eine erfindungsgemäße elektrische Vorrichtung kann grundsätzlich in allen elektrischen Vorrichtungen mit abzurichtenden Gehäusedurchführungen Einsatz finden. Insbesondere bezieht die Vorrichtung sich jedoch auf ein Lichtmodul, insbesondere ein LED-Modul, welches zumindest abschnittsweise durchsichtig ausgeführt ist, um in gewünschter Weise im Inneren des Gehäuses erzeugtes Licht nach außen transportieren zu können.

Bei einer Verbindung, die durch ein Dichtelement von außen nach innen in das Gehäuse eingeführt werden soll, ist vorzugsweise eine elektrische Verbindung vorgesehen. Diese kann zum Einen als Stromversorgung, darüber hinaus aber auch als signaltechnische Kommunikationsleitung ausgebildet sein. Die Form des Dichtelementes weist dabei zwei Funktionsabschnitte auf. Ein erster Funktionsabschnitt ist vorzugsweise derart ausgeführt, dass er in seiner geometrischen Ausprägung mit der Dichtaufnahme des ersten Gehäuseteils korrespondiert, also in diese Dichtaufnahme einsetzbar ist. Ein weiterer, davon separater Abschnitt ist als Funktionsabschnitt in Form der Dichtnut ausgebildet, sodass Dichtnut und Verbindungsnut einen einander fortsetzenden Verlauf bilden können.

Die Nuten, also insbesondere die Dichtnut und die Verbindungsnut, sind dabei insbesondere U-förmig ausgebildet, wobei diese beiden U-Schenkel unterschiedlich lang ausgebildet sein können. Dies führt dazu, dass unterschiedlich lange Schenkel eine erleichterte Montage beim Einsetzen des zweiten Gehäuseteils auf das erste Gehäuseteil und das entsprechende Einführen in die Verbindungsnut bzw. die Dichtnut ermöglichen. Das zweite Gehäuseteil muss nicht zwangsläufig an das Dichtelement angepasst sein. Vielmehr ist es möglich, das zweite Gehäuseteil als eine bereits bekannte Gehäuseform zu verwenden und ausschließlich das erste Gehäuseteil mit einer entsprechenden Dichtaufnahme zu versehen.

Es kann von Vorteil sein, wenn bei einer erfindungsgemäßen elektrischen Vorrichtung die Dichtnut und die Verbindungsnut einen identischen oder einen im Wesentlichen identischen Nutquerschnitt aufweisen. Unter Nutquerschnitt ist dabei der Querschnitt zu verstehen, entlang welchem sich eine eingefüllte Masse, z. B. ein elastisches Dichtelement oder ein flüssiges Dichtmittel, frei bewegen kann. Bei dem U-förmigen Querschnitt ist das der Bereich zwischen den beiden U-Schenkeln. Das Vorsehen von einem identischen und/oder einem im Wesentlichen identischen Querschnitt bringt ein im Wesentlichen nahtloses Fortsetzen der Verbindungsnut durch die Dichtnut mit sich. Von außen her betrachtet wird aus geometrischer Sicht durch dieses Fortsetzen keine Unterscheidung zwischen Dichtnut und Verbindungsnut mehr möglich, sodass ein und dieselbe Abdichtmöglichkeit sowohl in der Verbindungsnut, als auch in der Dichtnut ergeben ist.

Ein weiterer Vorteil kann es sein, wenn bei einer elektrischen Vorrichtung gemäß der vorliegenden Erfindung in der Verbindungsnut und der Dichtnut ein ausgehärtetes Gussmaterial angeordnet ist. Insbesondere handelt es sich hierbei um Klebstoff. Dieses ausgehärtete Gussmaterial dient der Abdichtung zwischen dem zweiten Gehäuseteil und dem ersten Gehäuseteil sowie zwischen dem zweiten Gehäuseteil und dem Dichtelement. Mit anderen Worten erstreckt sich das Gussmaterial durch die Verbindungsnut und die Dichtnut, die sozusagen eine gemeinsame Nut bilden. Das ausgehärtete Gussmaterial, z. B. Kleber, dient neben der Abdichtung vorzugsweise auch dem Verkleben des ersten und des zweiten Gehäuseteils, sodass zusätzliche Montageschritte gespart werden können. In besonders kostengünstiger und einfacher Weise wird es somit möglich, die beiden Gehäuseteile miteinander zu verkleben, also kraftschlüssig miteinander zu verbinden, und gleichzeitig die gewünschte Abdichtung zu erzielen. Das Gussmaterial ist dabei vorzugsweise während des Herstellverfahrens besonders flüssig, sodass es sich in gewünschter Weise in der Nut verteilen lässt.

Ebenfalls vorteilhaft ist es, wenn im Rahmen der vorliegenden Erfindung das Dichtelement an einem elektrischen Kabel, insbesondere an einer Ummantelung des Kabels, angeordnet ist. Ein solches Kabel ist in das Innere des Gehäuses geführt, wobei im Inneren des Gehäuses eine Wanne für das Kabel und/oder Kabelelemente vorgesehen ist. Das Kabel dient der Versorgung von elektrischen Komponenten im Inneren des Gehäuses mit Strom, z. B. der Stromzuführung zu Licht erzeugenden Bauteilen. Auch Sensorik kann durch ein solches Kabel in das Innere eines Gehäuses eingeführt werden. Das Vorsehen einer Wanne im Inneren des Gehäuses bringt es mit sich, dass in dem Bereich, in welchem das Kabel in das Innere des Gehäuses ragt, ein weiterer Aufnahmeraum für Abdichtmasse vorgesehen ist. So kann in dieser Wanne eine dünnflüssige Masse, also ein Fluid in Form von beispielsweise einem Kleber, bei der Montage eingefüllt werden. Härtet das Material, also das Gussmaterial, in dieser Wanne aus, so wird der Bereich im Inneren des Gehäuses, in welchem das Kabel durch das Dichtelement eingetreten ist, zusätzlich abgedichtet. Dies führt dazu, das Kabel, welche mit elektrischen Leitdrähten versehen sind, im Inneren des Gehäuses von der Ummantelung befreit werden können. Bei bekannten Vorrichtungen hat dies den Nachteil, dass entlang dieser einzelnen Kabelstränge innerhalb eines solchen Kabels, z. B. durch Kapillarkräfte, Flüssigkeit in das Innere des Gehäuses gelangen kann. Gegen diese Flüssigkeit wird jedoch zusätzlich durch eine Wanne mit entsprechendem Gussmaterial abgedichtet, sodass auch dieser Weg für Flüssigkeit von außen in das Innere des Gehäuses abgedichtet ist.

Ein weiterer Vorteil ist es, wenn bei einer erfindungsgemäßen elektrischen Vorrichtung das Dichtelement ein Formschlussabschnitt mit einer Kontur aufweist, die mit der Kontur der Dichtaufnahme des ersten Gehäuseteils zumindest teilweise einen Formschluss bildet. Dieser Formschluss dient dazu, dass eine Zugentlastung bereits vor zusätzlicher Abdichtung oder zusätzlichem Hinzufügen von aushärtbarem Gussmaterial erzielt wird. Das Dichtelement wird also in die Dichtaufnahme eingesetzt und verbleibt durch den zumindest teilweisen Formschluss in der eingesetzten Position. Es erzeugt dabei insbesondere eine Sperrung in Richtung der Kabelachse, sodass eine Zugentlastung des Kabels für die Kraftentkopplung der Dichtung erzielt werden kann. Z. B. ist ein umgedrehtes U-Profil oder eine Verjüngung der Dichtaufnahme nach außen aus dem Inneren des Gehäuses hinausgerichtet denkbar.

Ein weiterer Vorteil ist es, wenn bei einer erfindungsgemäßen elektrischen Vorrichtung das Dichtelement und/oder das erste Gehäuseteil zumindest einen Kanal aufweisen, der die Dichtnut mit dem Kontaktbereich zwischen dem Dichtelement und dem ersten Gehäuseteil verbindet. Ein solcher Kanal kann dazu führen, dass bei dem Verwenden von flüssigem Gussmaterial, dieses auch in den Kontaktbereich zwischen dem Dichtelement und dem ersten Gehäuseteil gelangen kann. Wird bei der Montage eines Gehäuses für eine elektrische Vorrichtung gemäß der vorliegenden Erfindung in die Dichtnut und/oder die Verbindungsnut entsprechendes flüssiges Gussmaterial eingeführt, so gelangt dieses durch die Schwerkraft oder durch Kapillarwirkung auch in den entsprechenden Kanal. Damit wird eine Verklebung und/oder eine Abdichtung auch zwischen dem Dichtelement und dem Kontaktbereich zum ersten Gehäuse, also der Dichtaufnahme, erzielt. Im fertigen Zustand ist dieses Vergussmaterial, insbesondere der Klebstoff ausgehärtet, sodass eine noch weiter verbesserte Abdichtung erfolgen kann.

Ebenfalls vorteilhaft kann es sein, wenn bei einer erfindungsgemäßen elektrischen Vorrichtung eine Schnapp-Rast-Vorrichtung zwischen dem Dichtelement und dem ersten Gehäuseteil angeordnet ist, um diese miteinander kraftschlüssig zu verbinden. Dies führt dazu, dass die Montage noch sicherer und noch schneller stattfindet. Insbesondere handelt es sich dabei um eine Schnapp-Rast-Vorrichtung, die in irreversibler Weise den Kraftschluss erzeugt. Ein Funktionsdefekt nach der Öffnung würde eine Erhöhung der Sicherheit mit sich bringen, da nach der Öffnung des Gehäuseteils eine anschließende Inbetriebnahme nicht mehr möglich sein würde. Die Schnapprastverbindungen mit den Schnapprastvorrichtungen sind dabei vorzugsweise integral mit der jeweiligen Komponente, also dem Dichtelement und/oder dem ersten Gehäuseteil verbunden. Z. B. kann es sich um hervorragende Schnapp- und Rastmittel am Dichtelement handeln, die in Vertiefungen an dem ersten Gehäuseteil eingreifen.

Ein weiterer Gegenstand der vorliegenden Erfindung ist ein Dichtelement, welches für das Einsetzen in einer Dichtaufnahme einer elektrischen Vorrichtung ausgebildet ist. Bei dieser elektrischen Vorrichtung handelt es sich insbesondere um ein Lichtmodul. Diese elektrische Vorrichtung weist die Merkmale einer elektrischen Vorrichtung gemäß der vorliegenden Erfindung auf. Dementsprechend bringt ein erfindungsgemäßes Dichtelement die gleichen Vorteile mit sich, wie sie ausführlich für eine erfindungsgemäße elektrische Vorrichtung erläutert worden sind.

Ebenfalls Gegenstand der vorliegenden Erfindung ist ein Verfahren zum Abdichten eines Gehäuses einer elektrischen Vorrichtung, insbesondere eines Lichtmoduls, mit den Merkmalen einer erfindungsgemäßen elektrischen Vorrichtung. Ein solches Verfahren weist vorzugsweise die folgenden Schritte auf:
- Einsetzen des Dichtelements in die Dichtaufnahme,
- Schließen des Gehäuses durch abschnittsweises Einbringen des zweiten Gehäuseteils in die Verbindungsnut des ersten Gehäuseteils und die Dichtnut des Dichtelements.

Durch ein erfindungsgemäßes Verfahren wird die Montage einer erfindungsgemäßen elektrischen Vorrichtung durchgeführt. Dementsprechend werden auf diese Weise die gleichen Vorteile erzielt, wie sie ausführlich in Bezug auf eine erfindungsgemäße elektrische Vorrichtung erläutert worden sind.

Ein erfindungsgemäßes Verfahren lässt sich vorteilhafterweise dahin gehend weiterbilden, dass vor dem Schließen des Gehäuses in die Verbindungsnut und die Dichtnut und/oder in eine Wanne im Inneren des Gehäuses ein flüssiger, aushärtbarer Kunststoff eingebracht wird. Selbstverständlich sind auch andere Dichtelemente, z. B. Feststoffe wie Ohrringe oder elastische Materialien als Dichtelement denkbar. Aushärtbarer Kunststoff bringt den Vorteil mit sich, dass auf diese Weise in besonders schneller und effizienter Weise eine formschlüssige Abdichtung und dementsprechend eine besonders dichte Abdichtung im Rahmen der vorliegenden Erfindung möglich wird.

### Beschreibung der Zeichnungen

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
Fig. 1 in schematischer Ansicht ein geöffnetes Gehäuse einer elektrischen Vorrichtung,
Fig. 2 die elektrische Vorrichtung der Figur 1 in einer weiteren Darstellung,
Fig. 3a eine Ausführungsform eines erfindungsgemäßen Dichtelementes,
Fig. 3b eine Ausführungsform eines erfindungsgemäßen ersten Gehäuseteils,

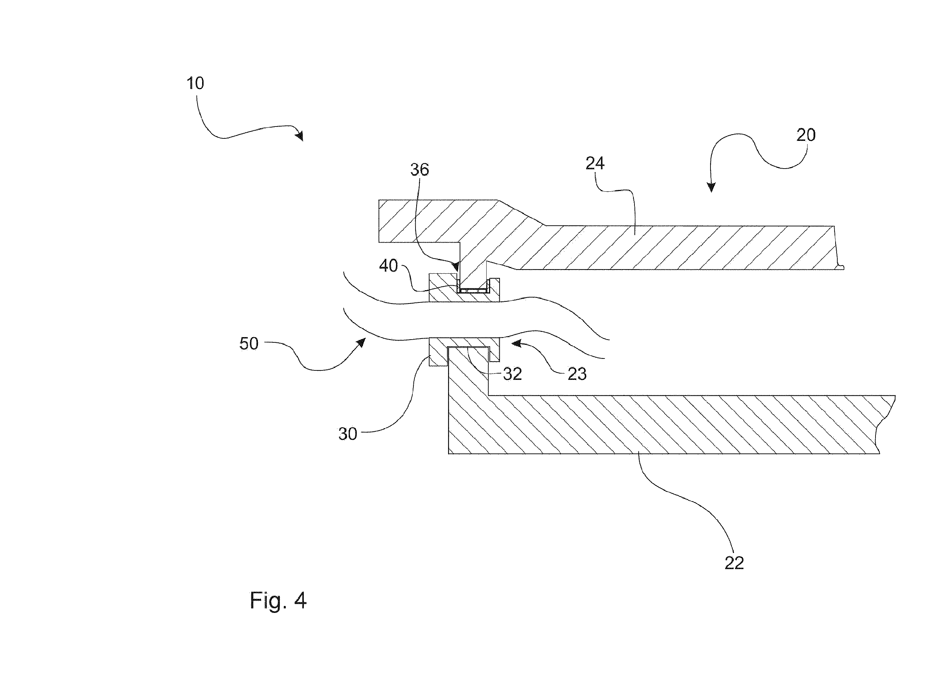

Fig. 4 eine Ausführungsform einer erfindungsgemäßen elektrischen Vorrichtung im schematischen Teilschnitt und

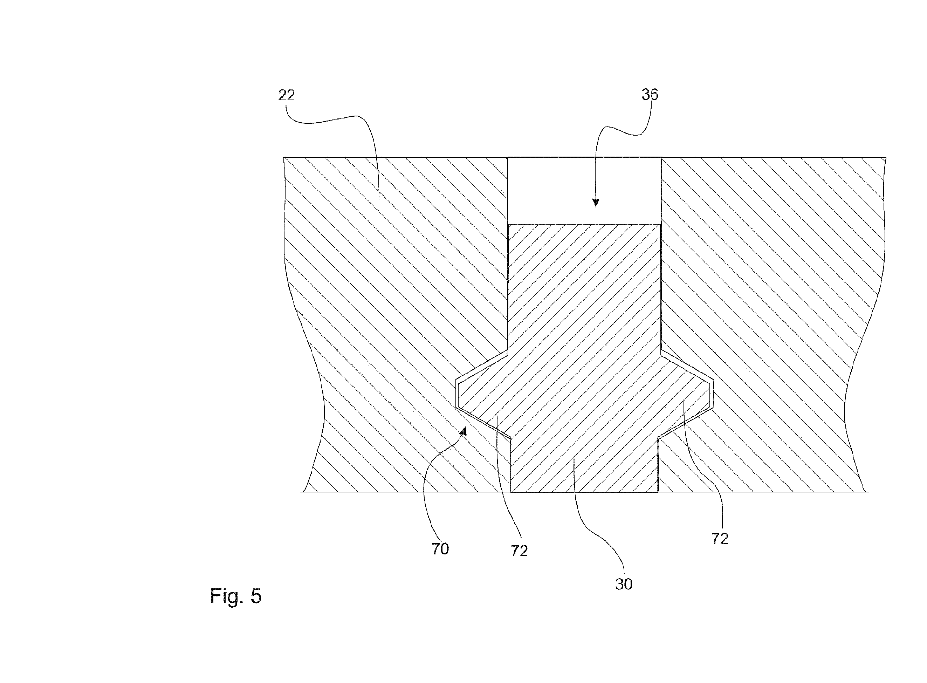

Fig. 5 eine Ausführungsform eines erfindungsgemäßen Dichtelementes eingesetzt in eine Dichtaufnahme im schematischen Querschnitt.

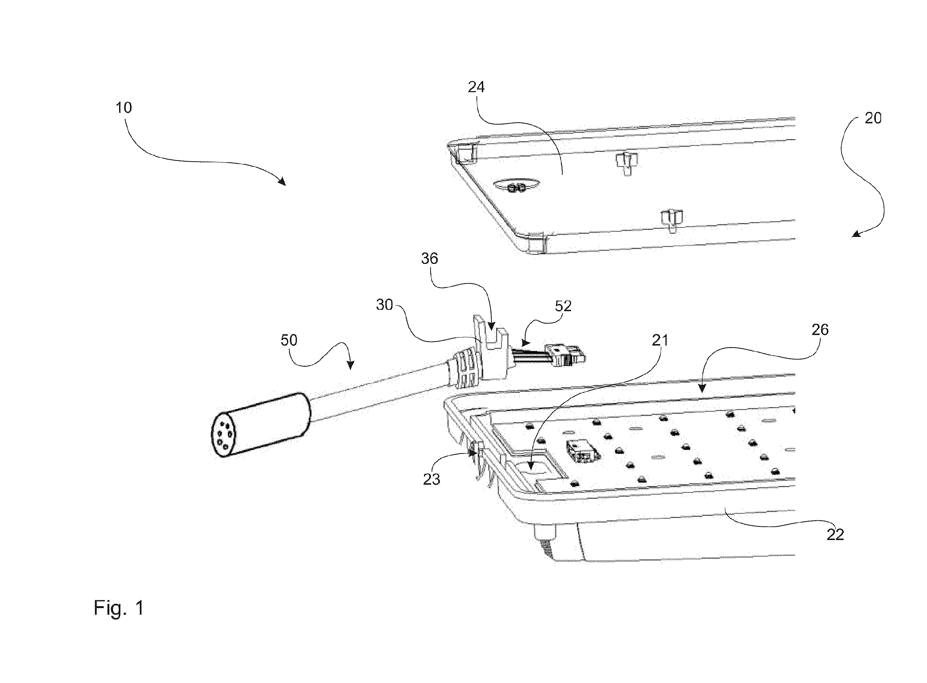

In Figur 1 ist eine erste Ausführungsform einer erfindungsgemäßen elektrischen Vorrichtung 10 dargestellt. Dabei handelt es sich um ein LED-Modul mit einer Vielzahl von einzelnen LEDs, wie sie andeutungsweise im Inneren eines ersten Gehäuseteils 22 zu erkennen sind. Umlaufend ist am ersten Gehäuseteil 22 eine Verbindungsnut 26 zu erkennen, welche an einer Stelle auf der linken vorderen Seite des ersten Gehäuseteils 22 durch eine Dichtaufnahme 23 unterbrochen ist. In diese Dichtaufnahme kann ein Dichtelement 30 eingesetzt werden, welches an einem Kabel 50 befestigt ist. Vorzugsweise ist dieses Dichtelement 30 und die Ummantelung des Kabels 50 umspritzt, also mit diesem integral ausgebildet.

Das Dichtelement 30 dieser Ausführungsform weist eine Dichtnut 36 auf, die in dem Querschnitt im Wesentlichen U-förmig mit zwei unterschiedlichen langen Schenkeln ausgebildet ist. Diese Nut-Querschnittsform entspricht der Verbindungsnut 26, wie sie im Wesentlichen umlaufend in dem ersten Gehäuseteil 22 ausgebildet ist. Darüber hinaus ist am Kabel 50 eine Abisolierung vorgesehen, sodass auf der Innenseite, bezogen auf das Dichtelement 30, die einzelnen Kabelstränge als Kabelelemente 52 sichtbar sind. Nach dem Einsetzen des Dichtelementes 30 in der dafür vorgesehenen Dichtaufnahme 23 befinden sich die einzelnen Kabelelemente 52 in einer Wanne 21 im Inneren des Gehäuses 20. Anschließend kann der Verguss stattfinden. So ist es dann möglich, noch vor dem Schließen des Gehäuses 20 durch das zweite Gehäuseteil 24, in die Verbindungsnut 26 und/oder in die Dichtnut 36 einen flüssigen Klebstoff oder ein anderes flüssiges Dichtmittel einzuführen. Durch die flüssige Ausführungsform dieses Gussmaterials verteilt es sich durch die Nut, welche durch die Verbindungsnut 26 und die Dichtnut 36 gebildet wird. Zusätzlich ist es möglich, in die Wanne 21 ein gleiches oder ähnliches, flüssiges Gussmaterial einzuführen, sodass auch dort eine zusätzliche Abdichtung erfolgen kann. Noch im flüssigen Zustand wird das zweite Gehäuseteil 24 aufgesetzt, sodass ein Teil des zweiten Gehäuseteils 24 in die Dichtnut 36 und die Verbindungsnut 26 hineinragt. Durch das Aushärten des Gussmaterials und das Hineinragen werden die beiden Gehäuseteile 22 und 24 miteinander kraftschlüssig verbunden und gleichzeitig das gewünschte Abdichten zwischen den Gehäuseteilen 22 und 24, wie auch der Kabeldurchführung durch das Dichtelement 30 zur Verfügung gestellt.

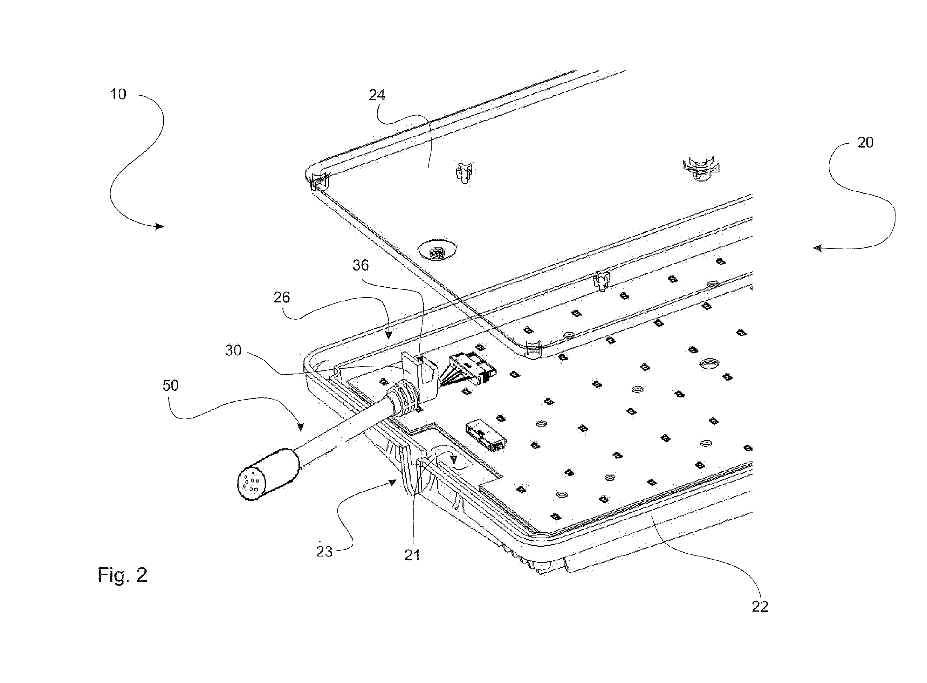

In Figur 2 ist die Ausführungsform der Figur 1 in einer anderen Ansicht dargestellt, sodass die Wanne 21 noch besser zu erkennen ist. Darüber hinaus ist zu erkennen, dass zwischen der Dichtaufnahme 23 und dem Dichtelement 30 ein Formschluss hergestellt werden kann, wobei durch das Einsetzen des Dichtelementes 30 in die Dichtaufnahme 23 ein Herausziehen entlang der Kabelachse des Kabels 50 nicht mehr möglich ist. Dementsprechend wird auch ohne zusätzliche Abdichtung oder Verklebung durch Gussmaterial eine Zugentlastung entlang der Kabelachse des Kabels 50 erzielt.

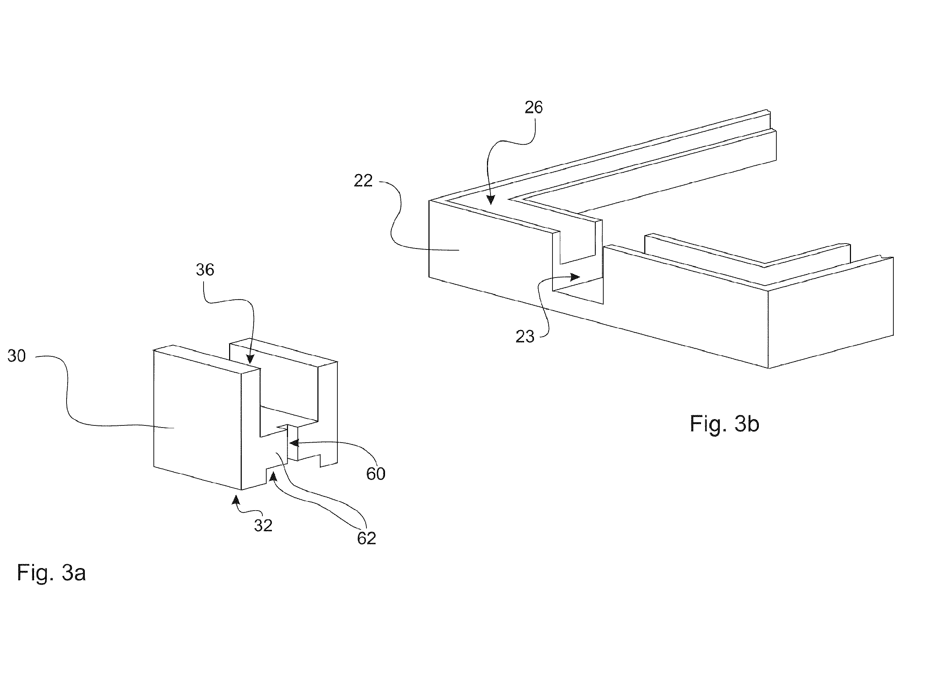

Die Figuren 3a und 3b zeigen eine weitere Möglichkeit der Ausführung der vorliegenden Erfindung. So ist in Figur 3a eine Möglichkeit der Ausführung des Dichtelementes 30 dargestellt. Dieses ist in eine Dichtaufnahme 23 einzusetzen, wie sie z. B. in Figur 3b bei einer Ausführungsform eines ersten Gehäuseteils 22 zu erkennen ist. Die Dichtnut 36 führt dabei wiederum im Wesentlichen U- förmiger

## Patentansprüche

1. Elektrische Vorrichtung (10), insbesondere Lichtmodul, aufweisend ein Gehäuse (20) mit zumindest einem ersten (22) und einem zweiten Gehäuseteil (24), wobei wenigstens das erste Gehäuseteil (22) eine Verbindungsnut (26) aufweist für die abschnittsweise Aufnahme wenigstens des zweiten Gehäuseteils (24), und das erste Gehäuseteil (22) eine Dichtaufnahme (23) aufweist, in die ein Dichtelement (30) mit einer Dichtnut (36) eingesetzt ist, das Dichtelement (30) an einem elektrischen Kabel (50), insbesondere an einer Ummantelung des Kabels (50), angeordnet ist, welches Kabel (50) in das Innere des Gehäuses (20) geführt ist,
**dadurch gekennzeichnet, dass**
die Dichtnut (36) die Verbindungsnut (26) zumindest abschnittsweise fortsetzt und dass
im Inneren des Gehäuses (20) eine Wanne (21) für das Kabel (50) und/oder Kabelelemente (52) vorgesehen ist, wobei die Verbindungsnut (26) und/oder die Dichtnut (36) sowie die Wanne (21) ein flüssiger Klebstoff oder ein anderes flüssiges Dichtmittel eingeführt werden kann.

2. Elektrische Vorrichtung (10) nach Anspruch 1,
**dadurch gekennzeichnet, dass**
die Dichtnut (36) und die Verbindungsnut (26) einen identischen Nutquerschnitt aufweisen.

3. Elektrische Vorrichtung (10) nach einem der vorangegangenen Ansprüche,
**dadurch gekennzeichnet, dass**
sich in der Verbindungsnut (26) und der Dichtnut (36) ein ausgehärtetes Gussmaterial (40), insbesondere ein Klebstoff, befindet, welches eine Abdichtung zwischen dem zweiten Gehäuseteil (24) und dem ersten Gehäuseteil (22) sowie zwischen dem zweiten Gehäuseteil (24) und dem Dichtelement (30) erzeugt.

4. Elektrische Vorrichtung (10) nach einem der vorangegangenen Ansprüche,
**dadurch gekennzeichnet, dass**
das Dichtelement (30) einen Formschlussabschnitt (32) mit einer Kontur aufweist, die mit der Kontur der Dichtaufnahme (23) des ersten Gehäuseteils (22) zumindest teilweise einen Formschluss bildet.

5. Elektrische Vorrichtung (10) nach einem der vorangegangenen Ansprüche,
**dadurch gekennzeichnet, dass**
das Dichtelement (30) und/oder das erste Gehäuseteil (22) zumindest einen Kanal (60) aufweisen, der die Dichtnut (36) mit dem Kontaktbereich (62) zwischen dem Dichtelement (30) und einer Dichtaufnahme (23) verbindet.

6. Elektrische Vorrichtung (10) nach einem der vorangegangenen Ansprüche,
**dadurch gekennzeichnet, dass**
eine Schnapp-Rast-Vorrichtung (70) zwischen dem Dichtelement (30) und dem ersten Gehäuseteil (22) angeordnet ist, um diese miteinander kraftschlüssig zu verbinden.

7. Verfahren zum Abdichten eines Gehäuses (20) einer elektrischen Vorrichtung (10), insbesondere eines Lichtmoduls, mit den Merkmalen eines der Ansprüche 1 bis 6, aufweisend die folgenden Schritte:
- Einsetzen des Dichtelements (30) in die Dichtaufnahme (23),
- Schließen des Gehäuses (20) durch abschnittsweises Einbringen des zweiten Gehäuseteils (24) in die Verbindungsnut (26) des ersten Gehäuseteils (22) und die Dichtnut (36) des Dichtelements (30).

8. Verfahren nach Anspruch 7,
**dadurch gekennzeichnet, dass**
vor dem Schließen des Gehäuses (20) in die Verbindungsnut (26) und die Dichtnut (36) und/oder in eine Wanne (21) im Inneren des Gehäuses (20) ein flüssiger, aushärtbarer Klebstoff eingebracht wird.

## Claims

1. Electrical device (10), in particular light module, comprising a housing (20) with at least a first (22) and a second housing part (24), wherein at least the first housing part (22) has a connecting groove (26) for section-wise receiving at least the second housing part (24), and the first housing part (22) comprising a sealing receptacle (23), into which a sealing element (30) with a sealing groove (36) is inserted, the sealing element (30) being arranged at an electric cable (50), in particular on a sheath of the cable (50), which cable (50) is guided into the interior of the housing (20),
**characterized in that**
the sealing groove (36) continues the connecting groove (26) at least partly, and that a trough (21) for the cable (50) and/or cable elements (52) is provided inside the housing (20), wherein a liquid adhesive or another liquid sealant may be introduced into the connecting groove (26) and/or the sealing groove (36) as well as the trough (21).

2. Electrical device (10) according to claim 1,
**characterized in that**
the sealing groove (36) and the connecting groove (26) have an identical groove cross-section.

3. Electrical device (10) according to any one of the preceding claims,
**characterized in that**
there is a cured casting material (40), in particular an adhesive, in the connecting groove (26) and the sealing groove (36) that generates a sealing between the second housing part (24) and the first housing part (22) as well as between the second housing part (24) and the sealing element (30).

4. Electrical device (10) according to any one of the preceding claims,
**characterized in that**
the sealing element (30) comprises a form-fitting section (32) with a contour that forms at least partially a form-fitting connection with the contour of the sealing receptacle (23) of the first housing part (22).

5. Electrical device (10) according to any one of the preceding claims,
**characterized in that**
the sealing element (30) and/or the first housing part (22) comprise at least one channel (60) connecting the sealing groove (36) with the contact region (62) between the sealing element (30) and a sealing receptacle (23).

6. An electrical device (10) according to any one of the preceding claims,
**characterized in that**
a snap-lock device (70) is arranged between the sealing element (30) and the first housing part (22), to connect them force-fittingly with each other.

7. Method for sealing a housing (20) of an electrical device (10), in particular a light module, comprising the features of one of claims 1 to 6, comprising the steps of:
- Inserting the sealing element (30) into the sealing receptacle (23),
- Closing the housing (20) by section-wise inserting the second housing part (24) into the connecting groove (26) of the first housing part (22) and the sealing groove (36) of the sealing element (30).

8. Method according to claim 7,
**characterized in that**
prior to closing the housing (20), a liquid, curable adhesive is introduced into the connecting groove (26) and the sealing groove (36) and/or into a trough (21) inside the housing (20).

## Revendications

1. Dispositif électrique (10), en particulier module lumineux, présentant un boîtier (20) avec au moins une première partie de boîtier (22) et une deuxième (24), la première partie de boîtier (22), au moins, présentant une gorge d'assemblage (26) pour la réception par parties d'au moins la deuxième partie de boîtier (24), et la première partie de boîtier (22) comportant un réceptacle d'étanchéité (23) dans lequel est inséré un élément d'étanchéité (30) avec une gorge d'étanchéité (36), lequel élément d'étanchéité (30) est disposé sur un câble électrique (50), en particulier sur une gaine du câble (50), le câble (50) étant guidé à l'intérieur du boîtier (20), **caractérisé en ce que** la gorge d'étanchéité (36) prolonge au moins en partie la gorge d'assemblage (26) et **en ce qu'**un creux (21) est prévu à l'intérieur du boîtier (20) pour le câble (50) et/ou des éléments de câble (52), un adhésif liquide ou un autre agent d'étanchéité liquide pouvant être introduit dans la gorge d'assemblage (26) et/ou la gorge d'étanchéité (36) ainsi que dans le creux (21).

2. Dispositif électrique (10) selon la revendication 1, **caractérisé en ce que** la gorge d'étanchéité (36) et la gorge d'assemblage (26) ont une section de gorge identique.

3. Dispositif électrique (10) selon l'une des revendications précédentes, **caractérisé en ce qu'**un matériau coulé et durci (40), en particulier un adhésif, se trouve dans la gorge d'assemblage (26) et la gorge d'étanchéité (36) et réalise une étanchéité entre la deuxième partie de boîtier (24) et la première partie de boîtier (22) ainsi qu'entre la deuxième partie de boîtier (24) et l'élément d'étanchéité (30).

4. Dispositif électrique (10) selon l'une des revendications précédentes, **caractérisé en ce que** l'élément d'étanchéité (30) présente une section d'engagement positif (32) avec un contour, qui forme au moins partiellement un engagement positif avec le contour du réceptacle d'étanchéité (23) de la première partie de boîtier (22).

5. Dispositif électrique (10) selon l'une des revendications précédentes, **caractérisé en ce que** l'élément d'étanchéité (30) et/ou la première partie de boîtier (22) présentent au moins un canal (60) qui relie la gorge d'étanchéité (36) à la zone de contact (62) entre l'élément d'étanchéité (30) et un réceptacle d'étanchéité (23).

6. Dispositif électrique (10) selon l'une des revendications précédentes, **caractérisé en ce qu'**il est prévu un dispositif à encliquetage et emboîtement (70) entre l'élément d'étanchéité (30) et la première partie de boîtier (22) pour relier ceux-ci entre eux par friction.

7. Procédé pour obtenir l'étanchéité d'un boîtier (20) d'un dispositif électrique (10), en particulier d'un module lumineux, possédant les caractéristiques de l'une des revendications 1 à 6, lequel procédé présente les étapes suivantes :
- insertion de l'élément d'étanchéité (30) dans le réceptacle d'étanchéité (23),
- fermeture du boîtier (20) par insertion par sections de la deuxième partie de boîtier (24) dans la gorge d'assemblage (26) de la première partie de boîtier (22) et la gorge d'étanchéité (36) de l'élément d'étanchéité (30).

8. Procédé selon la revendication 7, **caractérisé en ce qu'**avant la fermeture du boîtier (20), un adhésif liquide durcissable est introduit dans la gorge d'assemblage (26) et la gorge d'étanchéité (36) et/ou dans un creux (21) à l'intérieur du boîtier (20).
